# EUROPÄISCHE PATENTSCHRIFT

(11) **EP 0 784 758 B1**
(45) Veröffentlichungstag und Bekanntmachung des Hinweises auf die Patenterteilung: **03.05.2000**
(21) Anmeldenummer: 96905715.7
(22) Anmeldetag: 08.03.1996
(51) Int. Cl.: F16D 1/072

(54) **WELLEN-BEFESTIGUNG**
SHAFT FIXTURE
SYSTEME DE FIXATION POUR ARBRE

(30) Priorität: 11.05.1995 DE 19517258
(43) Veröffentlichungstag der Anmeldung: 23.07.1997
(73) Patentinhaber: Alpha Getriebebau GmbH, D-97999 Igersheim (DE)
(72) Erfinder: BAYER, Thomas, D-97999 Igersheim (DE); HOFMAN, Werner, D-97980 Bad Mergentheim (DE)
(74) Vertreter: Patentanwalts-Partnerschaft Rotermund + Pfusch
(86) Internationale Anmeldenummer: DE9600440
(87) Internationale Veröffentlichungsnummer: WO9635885

(56) Entgegenhaltungen:
- EP-A- 0 661 474
- DE-A- 2 925 058
- US-A- 3 396 554

## Beschreibung

Die Erfindung betrifft eine Wellen-Befestigung nach dem Oberbegriff des Patentanspruchs 1. Anstelle der Wellen-Befestigung kann es sich auch um eine Schaft-Befestigung handeln.

Eine solche Wellen-Befestigung ist in der deutschen Patentanmeldung P 4345099.7, die der nachveröffentlichten EP-A-0 661 474 entspricht, beschrieben. Diese Befestigungsart ermöglicht eine zentrische Aufnahme der zu befestigenden Welle, insbesondere eines Ritzelschaftes, innerhalb eines Aufnahmeteiles mit sehr hoher Genauigkeit. Die hohe Zentriergenauigkeit wird dadurch erreicht, daß die Welle beim Einschneiden des gezahnten Wellenbereiches B in einen entsprechenden Bohrungsabschnitt B' eines Aufnahmeteiles gleichzeitig vor und hinter diesem Abschnitt zentrisch in der Bohrung geführt wird. Zu diesem Zweck sind die Bohrung des Aufnahmeteiles und der Befestigungsbereich der Welle in jeweils drei Abschnitte A', B', C' bzw. A, B, C aufgeteilt. Dabei müssen die drei Bereiche der Bohrung jeweils unterschiedliche, in Fügerichtung abnehmende Durchmesser aufweisen. Bei der Welle müssen lediglich die Bereiche B und C einerseits und A andererseits voneinander unterschiedliche Durchmesser besitzen.

Der gezahnte Bereich B der Welle wird beim Fügen in die Bohrung eines Aufnahmeteiles zusätzlich zu dem Bereich A herangezogen. Dies geschieht dadurch, daß die Welle in dem gezahnten Bereich B über ihre Kopfkreisabschnitt solange zentrisch paßgenau in dem Bohrungsbereich C' anliegt und geführt wird, bis der Wellenbereich B vollständig in den zugehörigen Bohrungsbereich B' eingeschnitten ist. Mit beim Fügen abnehmender Führungslänge des Wellenbereiches B innerhalb des Bohrungsbereiches C' greift mit zunehmender Länge der Wellenbereich C als paßgenaue Zentrierung ein.

Bei der Befestigung einer gattungsgemäßen Welle mit durchmessergleichen Wellenbereichen B und C sind folgende zwei Fügevarianten möglich.
a) Der Wellenbereich B zentriert als erstes in dem Bohrungsbereich C'. Eine Zentrierung des Wellenbereiches A beginnt erst nach einem Einsetzen des Schneidvorgangs in den Bohrungsbereich B'. Die Zentrierung des Wellenbereiches C setzt erst nach Beginn des Einschneidens des Wellenbereiches B in den Bohrungsbereich B' ein. Die Bedingung für diese Ausführung lautet:
   A kleiner als B'.
b) Das Einschneiden des Wellenbereiches B erfolgt bei gleichzeitiger Zentrierung der Wellenbereiche B und/oder C einerseits und A andererseits. Dies setzt voraus, daß
   A größer als B'.

Bei einer gattungsgemäßen Wellen-Befestigung beschäftigt sich die Erfindung mit dem Problem, einen gleichen Durchmesser der Wellenbereiche B und C bei einem Wellenbereich D mit einer bezüglich des Kopf- und Fußkreises vorgegebenen Verzahnung möglichst groß ausführen zu können. Der Wunsch nach Auslegung der Bereiche B und C mit einem möglichst großen Durchmesser ergibt sich daraus, in diesem Bereich eine möglichst hohe Festigkeit und zwar insbesondere Torsionsfestigkeit realisieren zu können.

Gelöst wird dieses Problem durch eine Ausgestaltung der Wellenbereiche B und C nach den kennzeichnenden Merkmalen des Patenanspruchs 1.

Diese Lösung beruht auf dem Gedanken, daß die Zahnlücken der Verzahnung aus dem Bereich D in die Wellenbereiche B und C hineinlaufen dürfen. Bei der eingangs erwähnten Ausführung einer gattungsgemäßen Wellen-Befestigung nach der älteren Patentanmeldung war ein gleicher Durchmesser der Bereiche B und C stets so ausgelegt, daß dieser kleiner als der Fußkreisradius der Verzahnung des Bereiches D war. Der Grund hierfür war, daß ein Eingreifen der Zahnlücken des Bereiches D in die Wellenbereiche B und C als unbedingt zu vermeiden angesehen wurde.

Hier das Gegenteil herausgefunden zu haben, ist der Kern der vorliegenden Erfindung. Ausgehend von dieser Grunderkenntnis ist der Bereich B der Welle mit einer Rändelung zum Einschneiden dieses Bereiches in die Ausnehmung eines Anschlußteiles ausgelegt, die sich umfangsmäßig ausschließlich auf die Bereiche beschränkt, die zwischen den aus dem Bereich D stammenden Zahnlücken liegen. Dies bedeutet, daß die betreffenden Zahnlückenbereiche in dem Abschnitt B zur Rändelverbindung innerhalb der Aufnahmebohrung des anzuschließenden Teiles keinen Beitrag leisten. Die Festigkeit der Verbindung leidet jedoch hierdurch nicht, da der Durchmesser des Bereiches C so groß gewählt werden kann, daß das verbleibende Material zur Aufnahme der Rändelung von ausreichender Größe ist. Mit der erfindungsgemäßen Lösung ist es sogar möglich, den durch eine Rändelung belegten Materialbereich trotz der Zahnlücken größer auszulegen als bei einem unterhalb des Fußkreisdurchmessers des verzahnten Bereiches D liegenden Durchmessers.

Zwischen den angrenzenden Bereichen C und D ist bei der erfindungsgemäßen Ausführung kein Freistich erforderlich. Der Bereich C geht vielmehr über einen Radius in die Flanken der Verzahnung des Bereiches D über.

Die axiale Länge des ungerändelten Bereiches C ist zweckmäßigerweise größer als 10 Prozent des gemeinsamen Durchmessers der Bereiche B und C. Noch günstiger ist es, wenn dieser Bereich mehr als 20 Prozent des vorgenannten Durchmessers mißt.

Ein Ausführungsbeispiel ist in der Zeichnung dargestellt.

Es zeigen
- Fig. 1: die Ansicht eines Ritzels mit zwei durchmessermäßig unterschiedlichen, zur Befestigung dienenden Wellenbereichen,
- Fig. 2: einen Schnitt durch die Bohrung eines Aufnahmeteils zur Aufnahme der Ritzelwelle nach Fig. 1,
- Fig. 3: einen Schnitt durch eine teilweise in die Bohrung eines Aufnahmeteiles eingeführte Ritzelwelle,
- Fig. 4: einen Schnitt durch eine in die Bohrung eines Aufnahmeteiles vollständig eingefügte Ritzelwelle,
- Fig. 5: eine Ansicht auf das Ritzel mit Blick auf den Bereich A.

Bei der dargestellten Wellen- bzw. Schaft-Befestigung geht es um den Spezialfall einer zentrisch paßgenauen Ritzelwellen-Befestigung bei der Herstellung eines spielfreien Planetengetriebes. Hierfür ist jeweils ein Ritzel 1 mit einer Welle 2 versehen. Mit der Welle 2 ist das Ritzel 1 paßgenau in die Bohrung 3 eines Aufnahmeteiles 4 einzufügen.

Die Welle ist der Länge nach in drei Teilbereiche aufgeteilt, und zwar von ihrem freien Ende aus gesehen in einen ersten Paßbereich A, einen darauf folgenden gezahnten Bereich B sowie einen direkt an das Ritzel 1 anschließenden Paßbereich C. Die Zahnung des Bereiches B ist eine Rändelung.

Die Bohrung des Aufnahmeteiles ist in den Bereichen A', B', C', die funktionsmäßig den Wellenbereichen A, B, C entsprechen, aufgeteilt, wobei deren Durchmesser in alphabetischer Reihenfolge dieser Bereiche gesehen jeweils zunehmen. Der Bereich des Ritzels 1, mit dem dieses in rotierenden Gegenzahnrädern kämmt, ist mit D bezeichnet.

Beim Einschieben der Welle 2 des Ritzels 1 in die Bohrung 3 des Aufnahmeteiles 4 erfolgt das Einschneiden des Wellenbereiches B in den zugehörigen Bohrungsbereich B' bei gleichzeitiger, bereits vor dem Beginn des Einschneidens gegebener, Wellenzentrierung in den Bereichen A und B. Der Bereich B der Welle dient dabei lediglich zu Beginn des Einschneidevorganges als zusätzliche Zentrierung zu dem Zentrierbereich A. Sobald der Bereich B über eine gewisse Länge in den Bohrungsbereich B' schneidend eingedrungen ist, greift als zusätzlicher Zentrierbereich zu A der Wellenbereich C ein. Solange der Bereich C der Welle noch nicht vollständig in den Aufnahmebereich C' eingedrungen ist, zentriert auch noch der außerhalb des Bohrungsbereiches B' in dem Bohrungsbereich C' liegende Wellenbereich B.

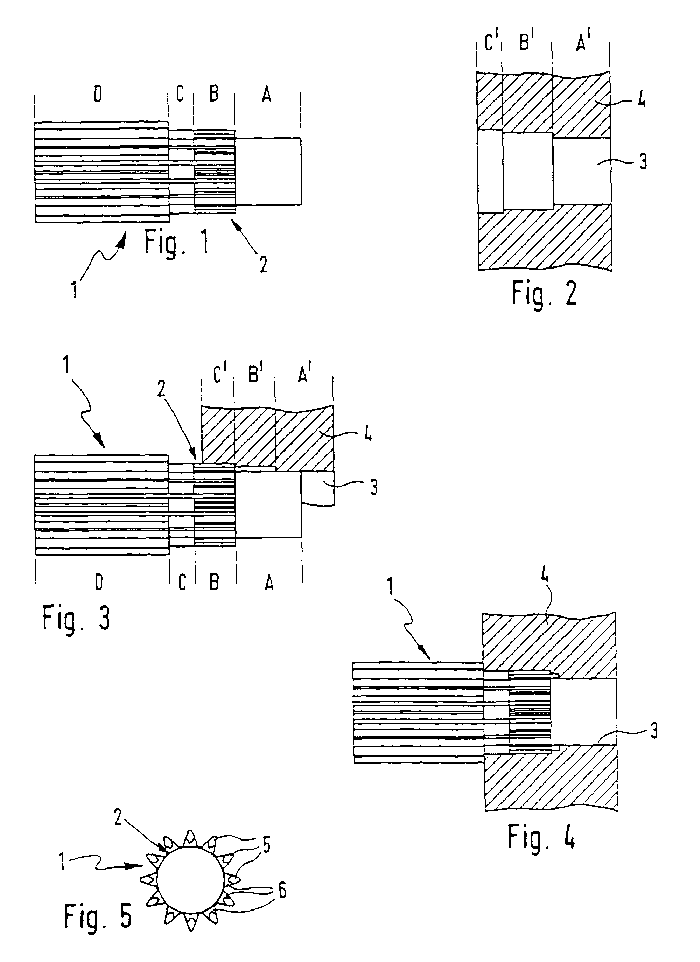

Aus Fig. 5 ist erkennbar, in welchem Maße die Zahnlücken aus dem Fußbereich der Verzahnung des Ritzels 1 in dem Bereich D in die Wellenbereiche C und B in radialer Tiefe hineinragen. Die Zähne der Verzahnung in dem Bereich D sind mit 5 bezeichnet während die Rändelverzahnung in dem Bereich B durch das Bezugszeichen 6 gekennzeichnet ist.

Der Wellenbereich C geht über geringe Radien in die Zähne 5 der Verzahnung des Bereiches D des Ritzels 1 über.

Durch die axiale Länge des Wellenbereiches B ist eine hohe Festigkeit der Verbindung zwischen dem Ritzel und dem Aufnahmeteil 4. Dies resultiert zum einen aus einem relativ großen gleichen Durchmesser der Bereiche C und B und zum anderen daraus, daß für die in der Verbindung auftretende Torsions- und Biegebeanspruchung in dem Übergangsbereich zwischen dem Rändelbereich B und dem Ritzelbereich D ein relativ langer Ausgleichsbereich C vorhanden ist. Dieser Ausgleichsbereich wirkt in erheblichem Maße festigkeitserhöhend für die Wellen-Befestigung.

## Patentansprüche

1. Befestigung einer Welle in einer Bohrung eines Aufnahmeteiles mit den Merkmalen
a) die Welle besitzt drei axiale Abschnitte A, B + C und D, die in alphabetischer Reihenfolge der sie bezeichnenden Buchstaben aneinandergrenzen und von denen der Abschnitt D den größten und der Abschnitt A den kleinsten Außendurchmesser aufweist und bei der die Teilbereiche B und C des Bereiches B + C mit gleichem Außendurchmesser ausgelegt sind,
b) bei der Welle sind der Abschnitt D und von dem Abschnitt B + C zumindest der Teilbereich B gezahnt bzw. gerändelt ausgeführt,
c) die Bohrung (3) des Aufnahmeteiles (4) ist in drei axial aneinandergrenzende Bereiche A', B' und C' mit gegeneinander größer werdenden Durchmessern aufgeteilt, beginnend mit dem Bereich A' mit kleinstem Durchmesser, in den die Welle mit ihrem Bereich A eingeführt wird,
d) die buchstabengleiche Bereiche A bzw. Teilbereiche B und C der Welle (2) und der Bohrung (3) sind bei in dem Aufnahmeteil (4) befestigter Welle (2) einander zugeordnet,
e) die Wellenbereiche bzw. Teilbereiche A und C liegen durchmessermäßig paßgenau in den zugehörigen Bohrungsbereichen A' und C' an,
f) bei in dem Aufnahmeteil (4) befestigter Welle (2) ist diese mit ihrem gezahnten bzw. gerändelten Teilbereich B durch den Fügevorgang formschlüssig in den Bohrungsbereich B' eingeschnitten,
**gekennzeichnet durch die beiden Merkmale:**
g) die durch die Zahnlücken der Verzahnung des Bereiches D gebildeten Ausnehmungen erstrecken sich in ihren Fußzonen durchgehend über die Bereiche C und B,
h) in dem Bereich B der Welle sind die umfangsmäßig zwischen den aus dem Bereich D bis in den Bereich B verlaufenden Ausnehmungen liegenden Bereiche mit einem Verzahnungs- bzw. Rändelprofil versehen.

2. Wellenbefestigung nach Anspruch 1,
**dadurch gekennzeichnet**,
daß die Breite des Wellenabschnittes C zumindestens 10 Prozent des Durchmessers dieses Bereiches mißt.

3. Wellenbefestigung nach Anspruch 2,
**dadurch gekennzeichnet**,
daß die Breite des Wellenabschnittes C mindestens 20 Prozent des Durchmessers dieses Wellenbereiches mißt.

4. Wellenbefestigung nach einem der vorhergehenden Ansprüche,
**dadurch gekennzeichnet**,
daß der Wellen-Bereich C über einen Radius in die Zähne des Bereiches D übergeht.

## Claims

1. Fastening of a shaft in a bore of a receiving part, having the features
a) the shaft possesses three axial portions A, B + C and D which are adjacent to one another in the alphabetic order of the letters designating them and of which the portion D has the largest and the portion A the smallest outside diameter, and in which the part regions B and C of the region B + C are designed with an equal outside diameter,
b) on the shaft, the portion D and, of the portion B + C, at least the part region B are designed to be toothed and knurled respectively,
c) the bore (3) of the receiving part (4) is divided into three regions A', B' and C', axially adjacent to one another and having diameters increasing relative to one another, commencing with the region A' of smallest diameter, into which the shaft is introduced with its region A,
d) the identically lettered regions A and part regions B and C of the shaft (2) and of the bore (3) are assigned to one another when the shaft (2) is fastened in the receiving part (4),
e) the shaft regions or part regions A and C bear with an accurate diametrical fit in the associated bore regions A' and C',
f) when the shaft (2) is fastened in the receiving part (4), said shaft is cut positively with its toothed or knurled part region B into the bore region B' by means of the joining operation,
characterized by the two features:
g) the clearances formed by the tooth spaces of the toothing of the region D extend continuously, in their root zones, over the regions C and B,
h) in the region B of the shaft, the regions located circumferentially between the clearances running out of the region D into the region B are provided with a toothed or knurled profile.

2. Shaft fastening according to Claim 1, characterized in that the width of the shaft portion C measures at least 10 % of the diameter of this region.

3. Shaft fastening according to Claim 2, characterized in that the width of the shaft portion C measures at least 20 % of the diameter of this shaft region.

4. Shaft fastening according to one of the preceding claims, characterized in that the shaft region C merges into the teeth of the region D via a radius.

## Revendications

1. Fixation d'un arbre dans un alésage d'un élément récepteur, ayant les caractéristiques suivantes :
a) l'arbre a trois tronçons axiaux A, B + C et D qui se suivent dans l'ordre alphabétique des lettres qui les désignent, le tronçon D a le plus grand diamètre extérieur et le tronçon A le plus petit diamètre extérieur, et les parties B et C du tronçon B + C ont le même diamètre extérieur,
b) sur l'arbre, le tronçon D et au moins la partie B du tronçon B + C sont dentés ou moletés,
c) l'alésage (3) de l'élément récepteur (4) est divisé en trois parties se suivant axialement A', B' et C' dont le diamètre croît de l'une à l'autre à partir de la partie A', de plus petit diamètre, dans laquelle est introduit le tronçon A de l'arbre,
d) les tronçons A ou parties B et C de même lettre de l'arbre (2) et de l'alésage (3) sont associés lorsque l'arbre (2) est fixé dans l'élément récepteur (4),
e) les tronçons ou parties A et C de l'arbre s'appuient ajustés en diamètre dans les parties correspondantes A' et C' de l'alésage,
f) l'arbre (2), lorsqu'il est fixé dans l'élément récepteur (4), est, par l'opération d'assemblage, incrusté par sa partie dentée ou moletée B dans la partie B' de l'alésage,
caractérisée par les deux caractéristiques suivantes :
g) les évidements formés par les entredents de la denture du tronçon D s'étendent dans leur zone de pied sur la totalité des parties C et B,
h) dans la partie B de l'arbre, les parties situées circonférentiellement entre les évidements s'étendant du tronçon D jusque dans la partie B sont pourvues d'un profil denté ou moleté.

2. Fixation d'arbre selon la revendication 1, caractérisée par le fait que la largeur de la partie C de l'arbre mesure au moins 10 pour cent du diamètre de cette partie.

3. Fixation d'arbre selon la revendication 2, caractérisée par le fait que la largeur de la partie C de l'arbre mesure au moins 20 pour cent du diamètre de cette partie.

4. Fixation d'arbre selon l'une des revendications précédentes, caractérisée par le fait que la partie C de l'arbre se raccorde par un rayon aux dents du tronçon D.
